# EUROPÄISCHE PATENTSCHRIFT

(11) **EP 4 438 322 B1**
(45) Veröffentlichungstag und Bekanntmachung des Hinweises auf die Patenterteilung: **29.04.2026**
(21) Anmeldenummer: 24163453.4
(22) Anmeldetag: 14.03.2024
(51) Int. Cl.: B60B 33/00

(54) **STECKBARE RADANORDNUNG FÜR EINEN ROLLATOR**
PLUG-IN WHEEL ASSEMBLY FOR A ROLLATOR
ENSEMBLE ROUE ENFICHABLE POUR DÉAMBULATEUR À ROULETTES

(30) Priorität: 22.03.2023 DE 102023107161
(43) Veröffentlichungstag der Anmeldung: 02.10.2024
(73) Patentinhaber: Beger, Udo, 84034 Landshut (DE)
(72) Erfinder: Beger, Udo, 84034 Landshut (DE)
(74) Vertreter: Pröll, Jürgen

(56) Entgegenhaltungen:
- EP-B1- 3 260 335
- DE-B3- 102017 116 011
- US-A1- 2011 232 708
- US-B1- 6 343 802

## Beschreibung

Die vorliegende Erfindung betrifft eine steckbare Radanordnung für einen Rollator, wobei die einzelnen Räder des Rollators je nach Bedarf umgesteckt werden können. Hierdurch lassen sich durch Veränderung der Spurbreite die Fahreigenschaften entsprechend der Umgebung, in welcher der Rollator eingesetzt werden soll, anpassen.

### Hintergrund

Der Einsatz von Gehhilfen in Form von Rollatoren soll Menschen beim Gehen unterstützen, denen das Laufen ohne Gehhilfe sonst schwerfallen würde. Sie bieten diesen Menschen einen sicheren Halt und können gleichzeitig beim Gehen vor sich hergeschoben werden. Dabei ist ein besonders sicherer Stand der Rollatoren stets unbedingt erforderlich, da andernfalls Stürze mit auch schweren Verletzungen die Folge sein können. Besonders im Freien und bei unebenem Gelände muss ein sicherer Stand gewährleistet sein. Hierzu wird oftmals eine breite Spurweite gewählt, die ein seitliches Umkippen verhindert. Ist man jedoch in einer sehr ebenen Umgebung unterwegs, wie sie in Innenräumen vorzufinden ist, so kann ein Rollator schmaler ausgebildet werden, da dieser nicht »geländegängig« dimensioniert sein muss, um sicher bewegt werden zu können.

### Stand der Technik

Es gibt Rollatoren, die nur für Innenräume geeignet sind und dementsprechend eine schmalere Spurweite aufweisen als Rollatoren, die für draußen geeignet sind. Solche Rollatoren werden auch Indoor-Rollatoren genannt. Rollatoren für Innenräume sind nur für sehr ebene Umgebungen sicher. Die Breite ist hierbei so dimensioniert, dass die Rollatoren gut durch Innenräume bewegt werden können, ohne an Hindernisse wie Türen, Möbel und Wände zu stoßen. Eine schmale Bauweise hat hierbei den Vorteil, dass solche Rollatoren auch sehr wendig sind und durch schmale Lücken hindurchgeschoben werden können. Nachteilig ist jedoch, dass hierbei auch immer eine schmale Griffbreite einhergeht, die wiederum den Halt einer Person reduziert. Außerdem ist die Kippsicherheit durch die schmale Bauweise verringert. Für einen Einsatz draußen sind solche Indoor-Rollatoren gänzlich ungeeignet und stellen für den Benutzer ein erhebliches Sturzrisiko dar.

Um sich draußen bei unebener Umgebung bewegen zu können, gibt es Rollatoren, die speziell für solche Bedingungen geschaffen sind, indem sie eine breitere Spurweite aufweisen als bei Rollatoren für Innenräume. Solche Rollatoren werden auch Outdoor-Rollatoren genannt. Durch die breitere Spurweite sind der Stand und dadurch auch der Halt stabiler. Sie weisen gegenüber Indoor-Rollatoren eine höhere Kippsicherheit auf. Auch kann so die Griffbreite entsprechend breiter gewählt werden, sodass sich Personen besser daran festhalten können. Nachteilig ist jedoch hierbei, dass auch das Handling und die Wendigkeit durch die breitere Bauweise verringert ist. Solche Rollatoren sind für den Gebrauch in Innenräumen gänzlich ungeeignet. Man würde schwerer durch Türen kommen und öfters an Hindernissen anstoßen, da Outdoor-Rollatoren breiter ausgebildet sind als Indoor-Rollatoren, weil die Räder bei Outdoor-Rollatoren außen angeordnet sind.

Sind Personen auf Rollatoren angewiesen und möchten sowohl drinnen in Innenräumen als auch draußen im Freien einen Rollator verwenden, so kommen sie nicht umhin, jeweils einen Rollator für draußen und einen Rollator für drinnen zu verwenden. Dies kostet zum einen Platz für die Rollatoren und zum anderen sind Rollatoren auch teuer in der Anschaffung. Darüber hinaus zahlt die gesetzliche Krankenkasse lediglich den günstigsten geeigneten Rollator oder aber auch nur einen Teil eines Rollators, sodass eine kostenintensive Zuzahlung erforderlich ist.

In EP 3 260 335 B1 wird eine Bremsvorrichtung für Rollatoren offenbart, die die Geschwindigkeitslimitierung eines Rades ermöglich. Es ist ferner eine Radanordnung der Hinterräder für einen Rollator gezeigt, die außen am Rahmen des Rollators angeordnet ist und je Rad eine Bremsvorrichtung aufweist.

### Aufgabe

Es ist daher Aufgabe der vorliegenden Erfindung einen Rollator bereitzustellen, welcher die Nachteile des oben genannten Stands der Technik überwindet und sowohl für die Anwendung draußen als auch drinnen geeignet ist.

### Lösung

Die vorstehend gestellte Aufgabe wird durch eine steckbare Radanordnung gemäß den Merkmalen nach Patentanspruch 1 gelöst. Es wird eine steckbare Radanordnung beschrieben, aufweisend wenigstens ein Profilrohr, wenigstens eine Steckachse, wenigstens ein Rad, welches mit der wenigstens einen Steckachse verbindbar ist, sowie wenigstens einen Haltebügel, mit dem die wenigstens eine Steckachse an dem wenigstens einen Profilrohr von jeder Seite des wenigstens einen Profilrohrs arretierbar ist, wobei der wenigstens eine Haltebügel und das wenigstens eine Profilrohr jeweils wenigstens eine Bohrung aufweisen, durch die die wenigstens eine Steckachse durchsteckbar ist. Von jeder Seite des wenigstens einen Profilrohrs arretierbar heißt, dass die wenigstens eine Steckachse sowohl von der einen Seite als auch von der anderen Seite an dem wenigstens einen Profilrohr durchsteckbar und arretierbar ist. Gleiches gilt sodann auch für das wenigstens eine Rad, welches mit der wenigstens einen Steckachse verbindbar ist.

Vorteilhaft ist das wenigstens eine Rad an einem freien Ende des wenigstens einen Profilrohrs anordenbar bzw. verbindbar. Dabei ist das wenigstens eine Rad vorteilhaft in beide Laufrichtungen ebenfalls drehbar. So kann die Radanordnung mit dem wenigstens einen Rad vorwärts und rückwärts bewegt werden.

Das wenigstens eine Rad ist an einem freien Ende der wenigstens einen Steckachse anordenbar bzw. verbindbar. Ist das wenigstens eine Rad mit der wenigstens einen Steckachse verbunden, so sind vorteilhaft das wenigstens eine Rad und die wenigstens eine Steckachse drehbar miteinander verbunden, sodass keine Drehbewegung von einer Komponenten auf die andere, das heißt von dem Rad auf die Steckachse und umgekehrt, übertragbar ist. Vorteilhaft ist das wenigstens eine Rad über ein Kugellager drehbar mit der wenigstens einen Steckachse verbindbar. Durch die Möglichkeit der steckbaren Anbringung der wenigstens einen Steckachse mit oder ohne des wenigstens einen Rads an das wenigstens eine Profilrohr ist die wenigstens eine Steckachse mit oder ohne dem wenigstens eine Rad leicht und schnell an das wenigstens eine Profilrohr montierbar. So kann sie zum Beispiel schnell und einfach gewechselt oder umgesteckt werden. Der wenigstens eine Haltebügel hält die wenigstens eine Steckachse nach der steckbaren Anbringung in ihrer Position an dem wenigstens einen Profilrohr.

Weitere vorteilhafte Ausgestaltungen der steckbaren Radanordnung sind in den Unteransprüchen genannt. So ist in einer vorteilhaften Ausgestaltung vorgesehen, dass die wenigstens eine Steckachse wenigstens eine radial umlaufende Ringnut aufweist. In einer weiteren vorteilhaften Ausführungsform weist die wenigstens eine Steckachse beidseitig entlang ihrer Längserstreckung jeweils eine Ringnut auf, sodass die wenigstens eine Steckachse insgesamt zwei Ringnuten aufweist.

Die Ringnut ist derart ausgebildet, dass der wenigstens eine Haltebügel in die Ringnut formschlüssig eingreifen kann, um die wenigstens eine Steckachse in Position zu halten. Der Außendurchmesser der Ringnut ist kleiner als der Außendurchmesser der Steckachse. Vorteilhaft weist die Ringnut ein rechteckiges Rotationsprofil auf, wobei das rechteckige Rotationsprofil um die Rotationsachse, welche entlang der Längserstreckung der Steckachse verläuft, rotiert ist. Es ist aber auch alternativ denkbar, dass die Ringnut ein rundes, insbesondere ein halbkreisförmiges oder U-förmiges Rotationsprofil, oder ein V-förmiges Rotationsprofil aufweist.

In einer weiteren vorteilhaften Ausgestaltung der steckbaren Radanordnung ist weiterhin eine Haltemanschette vorgesehen, die an dem äußeren freien Ende des wenigstens einen Profilrohrs angeordnet ist. Vorteilhaft bilden Haltemanschette und Profilrohr eine Presspassung aus. Die Haltemanschette weist außerdem gegenüberliegend zwei Bohrungen auf, die fluchtend zur Bohrung in dem wenigstens einem Profilrohr angeordnet sind und mindestens dessen Durchmesser aufweisen. So ist gewährleistet, dass die wenigstens eine Steckachse durch die Haltemanschette und das wenigstens eine Profilrohr hindurchgesteckt werden kann. An der Haltemanschette ist vorteilhaft der wenigstens eine Haltebügel angeordnet. Weiterhin ist vorteilhaft der Haltebügel über ein Halteelement mit der Haltemanschette verbunden. Auf diese Weise wird eine Verbindung zwischen Haltebügel und Profilrohr ausgebildet.

In einer weiteren vorteilhaften Ausgestaltung der steckbaren Radanordnung ist vorgesehen, dass das wenigstens eine Rad mit der wenigstens einen Steckachse beidseitig, das heißt von jeder Seite des wenigstens einen Profilrohrs, in die jeweils wenigstens eine Bohrung des wenigstens einen Haltebügels und der wenigstens einen Profilrohr einsteckbar ist, wodurch das wenigstens eine Rad in eine erste Steckposition und in eine zweite Steckposition verbringbar ist. Die zweite Steckposition befindet sich von dem wenigstens einen Profilrohr aus gesehen auf der entsprechend gegenüberliegenden Seite. Das heißt, dass das wenigstens eine Rad mit der wenigstens einen Steckachse beidseitig in die wenigstens eine Bohrung des wenigstens einen Profilrohrs und des wenigstens einen Haltebügels steckbar ist. Dadurch lässt sich die Position des wenigstens einen Rads an dem wenigstens einen Profilrohr einfach und schnell verlagern. Die erste Steckposition kann auch als Außenposition und die zweite Steckposition als Innenposition bezeichnet werden. So kann das wenigstens eine Rad entsprechend innen oder außen angeordnet werden. Der Wechsel der Steckposition ist durch die hier beschrieben Radanordnung schnell und einfach möglich.

Durch die Möglichkeit des Umsteckens des wenigstens einen Rads ist es möglich, die Spurbreite von zum Beispiel einem Rollator zu vergrößern oder zu verringern, je nach dem auf welche Seite des wenigstens einen Profilrohrs das wenigstens eine Rad gesteckt wird. Befindet sich das wenigstens eine Rad in der zweiten Steckposition bzw. der Innenposition, so wird eine verringerte Spurbreite ausgebildet. Befindet sich das wenigstens eine Rad in der ersten Steckposition bzw. der Außenposition, so wird eine vergrößerte Spurbreite ausgebildet.

In einer weiteren vorteilhaften Ausgestaltung der steckbaren Radanordnung ist vorgesehen, dass der wenigstens eine Haltebügel eine U-Form aufweist und an den Schenkeln der U-Form auf gleicher Höhe jeweils wenigstens eine Bohrung vorgesehen ist, durch die die wenigstens eine Steckachse durchsteckbar ist. Die U-Form weist hierbei vorteilhaft drei Abschnitte auf, welche jeweils gerade ausgebildet sind. Die beiden Schenkel sind vorteilhaft gleichlang ausgebildet und zwischen den beiden Schenkeln ist ein gerader Mittelabschnitt angeordnet, an die sich jeweils rechtwinklig die Schenkel anschließen. Die beiden Schenkel umfassen dabei das wenigstens eine Profilrohr von beiden Seiten auf der Innenseite und auf der Außenseite.

An den äußeren Enden der Schenkel sind vorteilhaft jeweils wenigstens eine Bohrung vorgesehen, wobei die Bohrungen auf gleicher Höhe angeordnet sind. In einer koaxialen Anordnung der Bohrungen des wenigstens einen Haltebügels und der Bohrung des wenigstens einen Profilrohrs kann die wenigstens eine Steckachse vollständig durch die Bohrungen durchgesteckt werden. Wird der wenigstens eine Haltebügel aus dieser koaxialen Anordnung herausbewegt, so greift dieser in die wenigstens eine Ringnut der Steckachse ein und fixiert diese in ihrer Position, so dass die wenigstens eine Steckachse nicht mehr aus der Bohrung des wenigstens einen Profilrohrs herausgezogen werden kann.

Vorteilhaft ist zwischen dem Mittelabschnitt des wenigstens einen Haltebügels und dem wenigstens einen Profilrohr eine Haltebügelführung angeordnet. Diese Haltebügelführung ist als Halteelement, besonders vorteilhaft als eine Schraube mit Druckfeder ausgebildet, wobei die Druckfeder vorteilhaft eine Spiralfeder ist und eine rücktreibende Federkraft auf den Haltebügel bewirkt. Alternativ ist auch denkbar, dass das Halteelement als eine Teleskopführung ausgebildet ist und sich stauchen und/oder auseinanderziehen lässt. Dadurch wird der wenigstens eine Haltebügel an dem wenigstens einen Profilrohr gehalten und gleichzeitig geführt. Vorteilhaft ist hierbei zusätzlich ein Federelement vorgesehen, was eine rücktreibende Kraft auf den Haltebügel bewirkt. Das Federelement kann hierbei innerhalb oder außerhalb der Teleskopführung angeordnet sein und ist beispielsweise als Spiralfeder ausgebildet.

Das Halteelement definiert in einer gestauchten Position des Federelements, bei welcher der Haltebügel in Richtung Profilrohr gedrückt wird, für die Steckachse eine Freigabeposition und in der nicht gestauchten Position eine Sperrposition, in welcher der Haltebügel in die wenigstens eine Ringnut der Steckachse eingreift und diese hierdurch formschlüssig in Position hält.

Möchte man nun das wenigstens eine Rad mit der wenigstens einen Steckachse von dem wenigstens einen Profilrohr lösen, so muss nur auf den Haltebügel gedrückt werden, sodass dieser in die Freigabeposition geschoben wird. Vorteilhaft weist hierzu der Haltebügel zusätzlich eine Bedienfläche auf. Die Bedienfläche kann als seitlicher Vorsprung, beispielsweise halbkreisförmig oder rechteckig ausgebildet sein. Ein Bediener kann so bequem und einfach auf die Bedienfläche drücken und dadurch den Haltebügel in Richtung des Profilrohrs bewegen. Nachdem die Verlagerung des Rads mitsamt Steckachse vollzogen ist und wieder vollständig durch die Bohrung von Profilrohr und Haltebügel gesteckt ist, kann die Druckbeaufschlagung auf den Haltebügel bzw. die Bedienfläche des Haltebügels beendet werden, sodass der Haltebügel durch die rücktreibende Federkraft wieder selbstständig in die Sperrposition zurückgeschoben wird und dabei in die wenigstens eine Ringnut der Steckachse formschlüssig eingreift.

In einer weiteren vorteilhaften Ausgestaltung der steckbaren Radanordnung ist vorgesehen, dass die wenigstens eine Bohrung an dem wenigstens einen Haltebügel als eine Doppelbohrung mit zwei sich überschneidenden Bohrungen mit unterschiedlich großen Durchmessern ist. Hierbei ist der größere Durchmesser derart ausgebildet, dass die Steckachse hindurch steckbar ist. Der kleinere Durchmesser ist so bemessen, dass ein Durchstecken der Steckachse verhindert wird. Die unterschiedlich großen Durchmesser der Doppelbohrungen überschneiden sich derart, dass die kleinere Bohrung an ihrer breitesten Stelle, die gleichzeitig dem kleineren Durchmesser entspricht, in die größere Bohrung mit dem größeren Durchmesser übergeht.

In einer weiteren vorteilhaften Ausgestaltung der steckbaren Radanordnung ist vorgesehen, dass bei der Doppelbohrung ein erster Durchmesser und ein zweiter Durchmesser vorgesehen ist, wobei der erste Durchmesser dem Außendurchmesser der Steckachse und der zweite Durchmesser dem Außendurchmesser der Ringnut derart entspricht, dass die Durchmesser der Doppelbohrung und die jeweiligen Außendurchmesser der Steckachse und der Ringnut jeweils als Spielpassungen ausgebildet sind. Das heißt, dass der erste Durchmesser so groß ist, dass die Steckachse hindurchgesteckt werden kann. Dabei entspricht der erste Durchmesser im Wesentlichen dem Außendurchmesser der Steckachse, wobei im Wesentlichen bedeutet, dass zwischen diesen eine Passtoleranz vorgesehen ist, so wie sie für die Dimensionierung von Spielpassungen fachüblich ist. In diesem Fall kann dies je nach Größe des Außendurchmessers der Steckachse wenige Zehntelmillimeter bis Millimeter betragen. Gleiches gilt ebenfalls für das Verhältnis zwischen zweitem Durchmesser und Außendurchmesser der Ringnut. Die Bohrung in dem wenigstens einen Profilrohr bildet ebenfalls mit dem Außendurchmesser der Steckachse eine Spielpassung aus.

In einer weiteren vorteilhaften Ausgestaltung der steckbaren Radanordnung ist vorgesehen, dass das wenigstens eine Profilrohr aus einem Strangpressprofil mit ovalem Querschnitt ausgebildet ist. Es ist ebenfalls denkbar, dass das wenigstens eine Profilrohr eine kreisrunde, rechteckige oder polyedrische Querschnittsform aufweist. Darüber hinaus ist ebenfalls denkbar, dass das Strangpressprofil eine innenliegende Stützstruktur aufweist, um das Biegemoment des wenigstens einen Profilrohrs zu erhöhen. Dies sorgt für Sicherheit und Stabilität der steckbaren Radanordnung.

In einer weiteren vorteilhaften Ausgestaltung der steckbaren Radanordnung ist vorgesehen, dass das wenigstens eine Profilrohr eine seitliche Schutzleiste aufweist. Diese Schutzleiste besteht vorzugsweise aus Kunststoff, insbesondere aus einem weichen Kunststoff, oder aus einem Gummi, vorteilhaft aus einem Weichgummi.

Die Schutzleiste dient als Kollisionsschutz. Wird das wenigstens eine Profilrohr mit der Schutzleiste gegen ein Hindernis, wie zum Beispiel eine Kante, bewegt, so wird der Stoß von der Schutzleiste abgefedert und vorteilhaft abgelenkt, sodass sowohl beim Hindernis als auch bei der steckbaren Radanordnung kein Schaden entsteht.

Es ist denkbar, dass die Schutzleiste über eine Nut im Profilrohr an diesem befestigt ist, sodass die Schutzleiste formschlüssig in die Nut eingreift. Die Nut ist hierbei entlang des wenigstens einen Profilrohrs seitlich angeordnet.

Es ist alternativ auch denkbar, dass die Schutzleiste auf einer Seite Rastelemente aufweist, die in entsprechende Rastaufnahmen bzw. Rastaussparungen am wenigstens einen Profilrohr eingreifen. So können beispielsweise Haltedübel mit Rastvorsprung am freien Ende vorgesehen sein, die in entsprechende Löcher am wenigstens einen Profilrohr eingeklickt werden können.

Schließlich ist auch denkbar, dass die Schutzleiste einfach seitlich auf das wenigstens eine Profilrohr aufgeklebt oder angeschraubt ist.

In einer weiteren vorteilhaften Ausgestaltung der steckbaren Radanordnung ist vorgesehen, dass die Radanordnung eine Bremse für das wenigstens eine Rad aufweist, mit der das wenigstens eine Rad bremsbar ist. So kann das wenigstens eine Rad abgebremst werden, das heißt die Rotation des wenigstens einen Rads kann vorteilhaft bis zum Stillstand gestoppt werden.

In einer weiteren vorteilhaften Ausgestaltung der steckbaren Radanordnung ist vorgesehen, dass die Bremse wenigstens eine Bremshülse mit daran angeordneter Bremsbacke aufweist, wobei die wenigstens eine Bremshülse verschiebbar an dem wenigstens einen Profilrohr angeordnet ist. Beim Bremsvorgang wird die wenigstens eine Bremshülse mit der Bremsbacke in Richtung Rad verschoben, bis die Bremsbacke auf das Rad trifft und radial dagegen drückt. Hierdurch wird eine Reibungskraft zwischen Rad und Bremsbacke bewirkt, die wiederum zu einem Abbremsen des Rads führt. Das Wirkprinzip entspricht dem einer Stempelbremse.

Die wenigstens eine Bremsbacke erstreckt sich vorteilhaft radial vom wenigstens einen Profilrohr nach außen weg. Sie ist gleichzeitig an der wenigstens einen Bremshülse verschiebbar gelagert. So kann die Bremsbacke entsprechend der Steckposition des Rads verschoben werden, sodass sich Bremsbacke und Rad auf der gleichen Seite des Profilrohrs befinden.

In einer weiteren vorteilhaften Ausgestaltung der steckbaren Radanordnung ist vorgesehen, dass die wenigstens eine Bremshülse mittels Zugkraftbeaufschlagung über wenigstens eine Bremsleitung verschiebbar ist, wobei die wenigstens eine Bremsleitung als ein Bowdenzug ausgebildet ist und wenigstens eine Seele, eine Hülse sowie eine Hülle umfasst. Die Seele befindet sich hierbei wenigstens zum Teil innerhalb der Hülle. Das äußere Ende der Seele ist mit dem äußeren Ende des wenigstens einen Profilrohrs befestigt. Die Befestigung erfolgt hierbei über eine Aufnahme an der Haltemanschette, in welche das äußere Ende der Seele aufgenommen ist. Die Hülle steht über die Hülse in Wirkverbindung mit der wenigstens einen Bremshülse.

In einer weiteren vorteilhaften Ausgestaltung der steckbaren Radanordnung ist vorgesehen, dass zwischen dem äußeren Ende der Seele, wo sie an dem wenigstens einen Profilrohr befestigt ist, und der Bremsbacke zusätzlich um die Seele herum eine Spiralfeder angeordnet, welche eine rücktreibende Federkraft auf die Bremsbacke bewirkt, sodass nach einer Zugkraftbeaufschlagung über die Bremsleitung, durch welche die Bremsbacke auf das Rad gedrückt wird, diese wieder vom Rad weg in ihre ursprüngliche Ausgangsposition verbracht wird. Dadurch wird ein sicheres Lösen der Bremse nach einem Bremsvorgang gewährleistet.

Es wird außerdem ein Rollator mit wenigstens einer steckbaren Radanordnung gemäß den Merkmalen nach Patentanspruch 1 beschrieben, wobei durch die wenigstens eine steckbare Radanordnung eine Spurbreitenveränderung des Rollators bewirkbar ist. Vorteilhaft weist der Rollator hierfür wenigstens eine steckbare Radanordnung auf, besonders vorteilhaft sind wenigstens zwei steckbare Radanordnungen vorgesehen, die gegenüberliegend angeordnet sind. Die Räder der gegenüberliegenden steckbaren Radanordnungen definieren hierbei die Spurbreite des Rollators, wobei die Spurbreite immer als Abstand zwischen wenigstens zwei Rädern definiert ist.

Wird nunmehr die Steckposition von wenigstens einem Rad verändert, so wird gleichzeitig eine Veränderung der Spurweite bewirkt. Das wenigstens eine Rad wird durch Veränderung der Steckposition entweder von innen nach außen oder umgekehrt verlagert. Bei einer symmetrischen Steckpositionsveränderung von wenigstens zwei Rädern sind folglich wenigstens die beiden Räder entweder außen oder innen bezogen auf den Rollator angeordnet.

Rollatoren, die für einen Einsatz draußen im Freien vorgesehen sind, weisen für einen stabilen und sicheren Halt eine breite Spurbreite auf. Demgegenüber weisen Rollatoren, die für den Innenbereich vorgesehen sind, eine schmalere Spurbreite auf, um komfortabel in Innenräumen bewegt werden zu können. Hierbei sind die Räder vorteilhaft nach innen verlagert, sodass eine schmalere Spurbreite eingestellt ist. Beim Einsatz für den Außenbereich sind die Räder vorteilhaft nach außen verlagert, um so eine größere Spurbreite bereitzustellen.

In einer vorteilhaften Ausführungsform beträgt bei einer steckbaren Radanordnung der Abstand zwischen Radmitte und Mitte des wenigstens einen Profilrohrs 45 mm, sodass beim Verlagern bzw. Umstecken des wenigstens einen Rads um 180° eine Verlagerung von 90 mm bezogen auf die Radmitte erfolgt. Werden auf beiden Seiten eines Rollators die Räder entsprechend in ihrer Steckposition um 180° verlagert bzw. umgesteckt, das heißt zum Beispiel von innen nach außen, so wird der Abstand der Räder um insgesamt 180 mm vergrößert. Man spricht in diesem Fall von einer Spurbreitenvergrößerung um 180 mm, was einen deutlich stabileren und sicheren Stand des Rollators ermöglicht, sodass dieser im Außenbereich eingesetzt werden kann.

Werden die Räder jeweils um 180° nach innen verlagert, so wird insgesamt die Spurbreite um 180 mm verringert, was den Einsatz in engen Innenräumen deutlich erleichtert. Gleichzeitig können sich die Räder durch ihre innenliegenden Position nicht mit beispielsweise Türkanten oder Möbelkanten verhaken. Bei einer möglichen Kollision des Rollators mit Hindernissen berühren sich lediglich die Profilrohre mit der Schutzleiste, wodurch der Zusammenstoß abgefedert und abgeleitet wird. Dies erhöht zusätzlich die Sicherheit des Rollators in Innenräumen.

So wird mit der hier beschriebenen steckbaren Radanordnung auch ein Rollator bereitgestellt, welcher sowohl für den Innenbereich als auch den Außenbereich geeignet ist, wobei die Räder entsprechend für den Einsatz außen oder innen entweder nach außen oder nach innen durch Umstecken verlagert werden können, wodurch die Spurbreite insgesamt vergrößert oder verkleinert wird.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine perspektivische Ansicht einer steckbaren Radanordnung für einen Rollator in einer ersten Steckposition mit entsperrtem Haltebügel,
- Fig. 2: eine perspektivische Ansicht der steckbaren Radanordnung aus Fig. 1 mit entsperrtem Haltebügel und ausgestecktem Rad,
- Fig. 3: eine weitere perspektivische Ansicht der steckbaren Radanordnung aus Fig. 1 mit entsperrtem Haltebügel und ausgestecktem Rad,
- Fig. 4: eine perspektivische Ansicht der steckbaren Radanordnung aus Fig. 1 in einer zweiten Steckposition mit gesperrtem Haltebügel,
- Fig. 5: eine perspektivische Ansicht der steckbaren Radanordnung ohne Bremsleitung mit gesperrtem Haltebügel,
- Fig. 6: eine Draufsicht der Radanordnung mit ungebremstem, außenliegendem Rad,
- Fig. 7: eine Draufsicht der Radanordnung mit gebremstem, außenliegendem Rad,
- Fig. 8: eine Seitenansicht der Radanordnung mit ungebremstem, außenliegendem Rad gemäß Fig. 6,
- Fig. 9: eine Seitenansicht der Radanordnung mit gebremsten, außenliegendem Rad gemäß Fig. 7,
- Fig. 10: eine perspektivische Ansicht der steckbaren Radanordnung mit Bremsleitung und mit gesperrtem Haltebügel.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

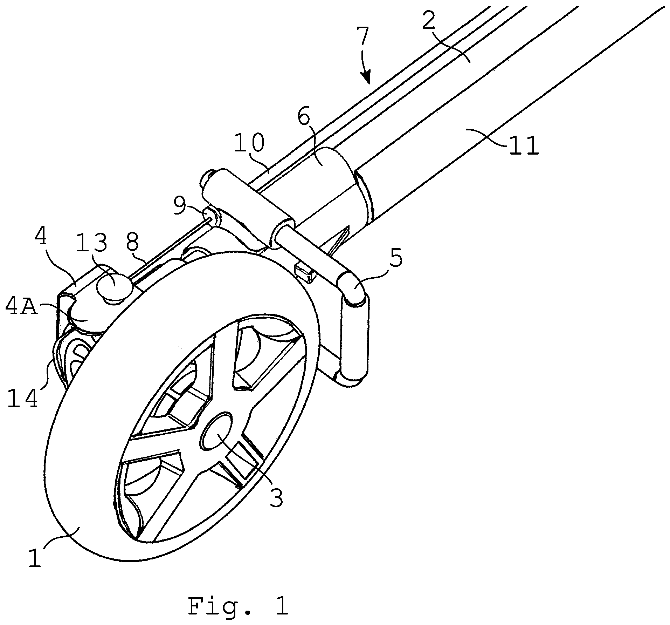

Fig. 1 zeigt eine perspektivische Ansicht einer steckbaren Radanordnung für einen Rollator in einer ersten Steckposition mit entsperrtem Haltebügel 4. Die Radanordnung weist eine Profilrohr 2 auf, an dem an einem äußeren Ende ein Rad 1 angeordnet ist, wobei das Rad 1 mithilfe einer Steckachse 3 an dem Profilrohr 2 befestigt ist. Die Steckachse 3 ist hierfür durch eine Bohrung am Haltebügel 4 und am äußeren Ende des Profilrohrs 2 gesteckt, wobei die Bohrung am Profilrohr 2 selbst in Fig. 1 nicht zu sehen ist und vom Rad 1 verdeckt wird. Die Arretierung zwischen Profilrohr 2 und Steckachse 3 erfolgt durch den Haltebügel 4, welcher sich in der gezeigten Ausführungsform in einer entsperrten, das heißt geöffneten Position befindet. In dieser Position des Haltebügels 4 ist das Rad 1 mitsamt der Steckachse 3 entnehmbar. Das heißt, der Haltebügel 4 hält die Steckachse 3 nicht mehr in Position. Der Haltebügel 4 weist für eine bessere Handhabbarkeit eine Bedienfläche 4A auf, welche von einem Bediener einfach und intuitiv gedrückt werden kann. Über die Bedienfläche 4A kann der Haltebügel 4 in Richtung Profilrohr 2 gedrückt werden, womit der Haltebügel 4 von einer gesperrten Position bzw. Sperrposition in eine entsperrte Position bzw. Freigabeposition verbringbar ist.

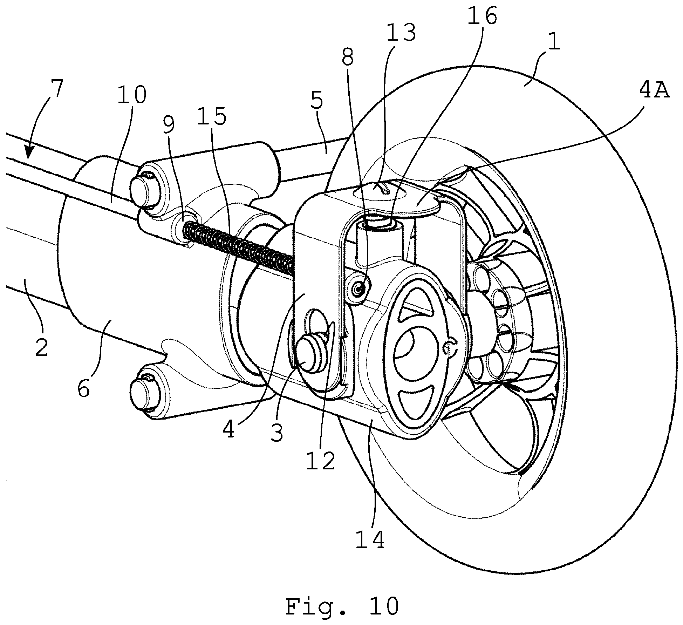

Der Haltebügel 4 ist über eine Haltemanschette 14 an dem äußeren Ende des Profilrohrs 2 befestigt. In einer vorteilhaften Ausgestaltung ist die Haltemanschette 14 auf das äußere Ende des Profilrohrs 2 aufgepresst. Der Haltebügel 4 ist mithilfe eines Halteelements 13 an der Haltemanschette 14 befestigt und gleichzeitig geführt. Das Halteelement 13 ist in der gezeigten vorteilhaften Ausführungsform als Schraube ausgebildet, die durch ein mittig angeordnetes Loch an dem Haltebügel 4 hindurchragt und in die Haltemanschette 14 eingeschraubt ist. Besonders vorteilhaft ist zusätzlich zwischen Haltemanschette 14 und Haltebügel 4 um das Halteelement 13 herum ein Federelement 16 in Form einer Spiralfeder angeordnet, die eine rücktreibende Federkraft auf den Haltebügel 4 ausübt, sodass dieser ohne Kraftbeaufschlagung stets in die Sperrposition gedrückt wird. Es ist aber auch denkbar, dass das Halteelement 13 als eine Teleskopführung ausgebildet ist. Das Federelement 16 ist in der Ausführungsform von Fig. 10 gezeigt.

Weiterhin weist die Radanordnung eine Bremse auf, mit welcher das Rad 1 bei Bedarf gebremst werden kann. Die Bremse weist dabei eine Bremsbacke 5 auf, die fluchtend zum Profilrohr 2 oberhalb des Rads 1 angeordnet ist und von einer Bremshülse 6 gehalten wird. Die Bremshülse 6 wiederum ist verschiebbar oberhalb des Rads 1 an dem Profilrohr 2 angeordnet. Im Grunde genommen ist die Bremshülse 6 auf das Profilrohr 2 aufgeschoben und auf diesem verschiebbar angeordnet.

Die Übertragung einer Bremskraft auf die Bremse, die eine Bewegung von der Bremshülse 6 gemeinsam mit der Bremsbacke 5 in Richtung Rad 1 bewirkt, erfolgt über eine Bremsleitung 7.

Die Bremsleitung 7 ist im Wesentlichen als ein Bowdenzug ausgebildet, welcher wenigstens eine Seele 8, eine Hülse 9 und eine Hülle 10 umfasst. Die Seele 8 ist hierbei am äußeren Ende des Profilrohrs 2 befestigt und liegt bis zur Hülse 9 frei. Hierbei ist das äußere freie Ende der Seele 8 von einer entsprechend ausgebildeten Aufnahme an der Haltemanschette 14 aufgenommen, sodass die Haltemanschette 14 die Verbindung zwischen Seele 8 und Profilrohr 2 ausbildet. Die Seele 8 liegt bis zur Hülse 9 frei und ist danach in der Hülle 10 aufgenommen und weitergeführt.

In einer vorteilhaften Ausgestaltung ist auf diesem Abschnitt der Seele 8 zwischen Hülse 9 und Befestigung am äußeren Ende des Profilrohrs 2, genauer an der Aufnahme an der Haltemanschette 14 ein Federelement in Form einer Spiralfeder angeordnet, die eine rücktreibende Kraft auf die Bremsleitung bewirkt und während einer Bremskraftbeaufschlagung gestaucht wird. Die Spiralfeder ist in der gezeigten Ausführungsform nicht gezeigt. Das Federelement 15 in Form der Spiralfeder ist in der Ausführungsform von Fig. 10 gezeigt.

Die Hülse 9 der Bremsleitung wiederum ist an der Bremshülse 6 angeordnet. An die Hülse 9 schließt sich die Hülle 10 an, wobei die Seele 8 auf diesem Abschnitt innerhalb der Hülle 10 geführt ist.

Schließlich weist das Profilrohr 2 auf einer Seite zusätzlich eine Schutzleiste 11 auf. Diese Seite kann gleichzeitig als Außenseite der Radanordnung bzw. des Rollators, bei dem die Radanordnung zum Einsatz kommt, bezeichnet werden. Demgemäß befindet sich das Rad 1 in Fig. 1 in einer Außenposition. Die gegenüberliegende Seite kann auch als Innenseite bezeichnet werden und bezogen auf das Rad 1 kann von einer Innenposition gesprochen werden. Die Schutzleiste 11 kann durch Verkleben, Verschraubung, Klick- oder Rastverbindungen oder durch eine Verbindung von Keder und Kedernut, wobei der Keder die Schutzleiste 11 ist, an dem Profilrohr 2 befestigt sein.

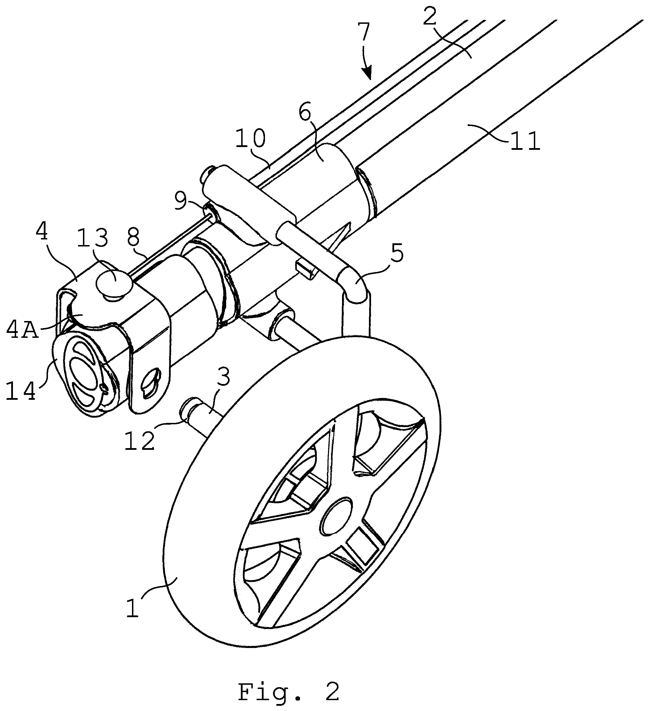

Fig. 2 zeigt eine perspektivische Ansicht der steckbaren Radanordnung aus Fig. 1 mit entsperrtem Haltebügel 4 und ausgestecktem Rad 1, das heißt, dass das Rad 1 gemeinsam mit der Steckachse 3 von der Profilrohr 2 gelöst und aus der Bohrung am äußeren Ende des Profilrohrs 2 herausgezogen ist. Die Fig. 2 zeigt eine Zwischenposition oder anders gesagt einen Zwischenschritt der Verlagerung des Rads 1 von einer ersten Steckposition außen in eine zweite Steckposition innen, wobei die erste Steckposition die in Fig. 1 gezeigte Außenposition des Rads 1 ist. Im ersten Schritt muss hierfür der Haltbügel 4 von der Sperrposition in die Freigabeposition verbracht werden. Dies erfolgt durch eine Druckkraftbeaufschlagung, vorteilhaft auf die Bedienfläche 4A, infolgedessen der Haltebügel 4 nach unten in Richtung Profilrohr 2 bewegt wird. Dadurch wird die Steckachse 3 freigegeben, sodass sie aus der Bohrung des Profilrohrs 2 herausgezogen werden kann.

In der in Fig. 2 gezeigten Zwischenposition ist das zugrundeliegende technische Prinzip der Halterung der Steckachse 3 an dem Profilrohr 2 mit Hilfe des Haltebügels 4 zu erkennen. Die Steckachse 3 weist hierfür an ihren freien Enden jeweils eine radial umlaufende Ringnut 12 auf. In Fig. 2 ist aufgrund der perspektivischen Darstellung die zweite Ringnut 12 durch das Rad 1 verdeckt. Der Haltebügel 4 weist eine U-Form auf, wobei an den Enden der beiden Schenkeln der U-Form jeweils eine Doppelbohrung vorgesehen ist. Die Doppelbohrung besteht aus zwei sich überschneidenden Bohrungen mit unterschiedlich großem Durchmesser, wobei der erste Durchmesser im Wesentlichen gleich dem Außendurchmesser der Steckachse 3 und der zweite Durchmesser im Wesentlichen gleich dem Außendurchmesser der Ringnut 12 ist. Im Wesentlichen bedeutet hier, dass geringe Passtoleranzen vorgesehen sind, so wie sie im Konstruktionsbereich üblich sind, damit die Steckachse 3 durch die entsprechende Doppelbohrung hindurchgeschoben werden kann. Hierfür muss der Durchmesser der Doppelbohrung stets geringfügig größer dimensioniert sein als der Außendurchmesser der Steckachse 3 bzw. als der Außendurchmesser der Ringnut 12. Die Passtoleranzen bewegen sich im Bereich von Zehntelmillimetern bis Millimetern. Die jeweiligen Durchmesser der Doppelbohrung und die Außendurchmesser der Steckachse 3 und der Ringnut 12 bilden gemeinsam eine Spielpassung aus.

Die Steckachse 3 ist durch die größere Bohrung der Doppelbohrung hindurchschiebbar. Befindet sich die Steckachse 3 in der ersten oder zweiten Steckposition und wird der Haltebügel 4 von der Profilrohr 2 wegbewegt, so greift die kleinere Bohrung der Doppelbohrung formschlüssig in die Ringnut 12 ein und hält dadurch die Steckachse 3 in Position. Vorteilhaft ist zwischen Haltbügel 4 und Profilrohr 2 bzw. Haltemanschette 14 ein Federelement angeordnet, welches eine rücktreibende Kraft auf den Haltebügel 4 bewirkt, sodass dieser stets selbsttätig von dem Profilrohr 2 wegbewegt, das heißt in Sperrposition verbracht wird. Mit einer Druckkraft von außen auf den Haltebügel 4, vorteilhaft über die Bedienfläche 4A, kann dieser in Richtung des Profilrohrs 2, das heißt in Freigabeposition, verbracht werden, wobei in dieser Position die Steckachse 3 mit Rad 1 entnommen werden kann. Das Federelement ist in Fig. 2 nicht dargestellt und stellt eine weitere vorteilhafte Ausführungsform dar. Das Federelement 16 ist in Fig. 10 dargestellt.

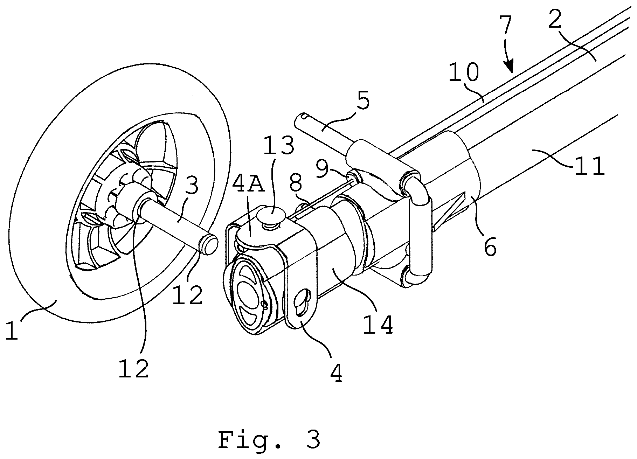

Fig. 3 zeigt eine weitere perspektivische Ansicht der steckbaren Radanordnung aus Fig. 1 mit entsperrtem Haltebügel 4 und ausgestecktem Rad 1, wobei das Rad 1 mit Steckachse 3 sich in einer weiteren Zwischenposition befindet. Gezeigt ist das Rad 1 mit Steckachse 3 um 180° gedreht und auf der gegenüberliegenden Seite des Profilrohrs 2 im Vergleich zu Fig. 1 und Fig. 2. Mit anderen Worten befindet sich das Rad 1 mit Steckachse 3 nunmehr auf der Innenseite des Profilrohrs 2. In dieser Position sind beide Ringnuten 12 an den äußeren Enden der Steckachse 3 zu sehen, wobei eine der beiden Ringnuten 12 sich in unmittelbarer Nähe zum Rad 1 befindet.

Um in der Innenposition des Rads 1 weiterhin bremsen zu können, wird die Bremsbacke 5 in Richtung Innenseite verschoben. Im Vergleich zu Fig. 1 und Fig. 2 erstreckt sich die Bremsbacke 5 nunmehr in entgegengesetzter Richtung radial weg vom Profilrohr 2. Der Vorgang des Bremsen bleibt grundsätzlich gleich und wird durch Beaufschlagung der Bremshülse 6 mit einer Bremskraft über die Bremsleitung 7 bewirkt, wobei die Bremshülse 6 gemeinsam mit der Bremsbacke 5 in Richtung Rad 1 bewegt wird.

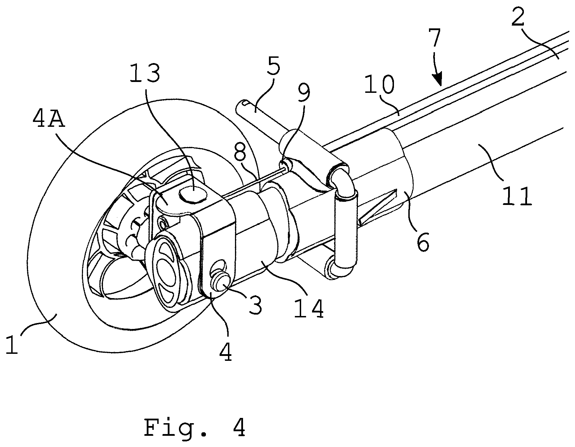

Fig. 4 zeigt eine perspektivische Ansicht der steckbaren Radanordnung aus Fig. 1 in einer zweiten Steckposition mit gesperrtem Haltebügel 4. Die zweite Steckposition kann auch als Innenposition bezeichnet werden. Das Rad 1 befindet sich im Vergleich zu Fig. 1 auf der gegenüberliegenden Seite des Profilrohrs 2. Der Haltebügel 4 befindet sich in der Sperrposition und hält das Rad 1 mit der Steckachse 3 in Position an dem Profilrohr 2. Hierbei greifen die Doppelbohrungen an dem Haltebügel 4 formschlüssig in die Ringnuten 12 an der Steckachse 3.

In Fig. 1 bis Fig. 4 wird der Ablauf dargestellt, bei dem das Rad 1 mit Steckachse 3 von einer Außenposition in eine Innenposition verbracht wird. Hierbei wird auch die Bremsbacke 5 von einer Außenposition in eine Innenposition verbracht, um weiterhin das Rad 1 bei Bedarf abbremsen zu können.

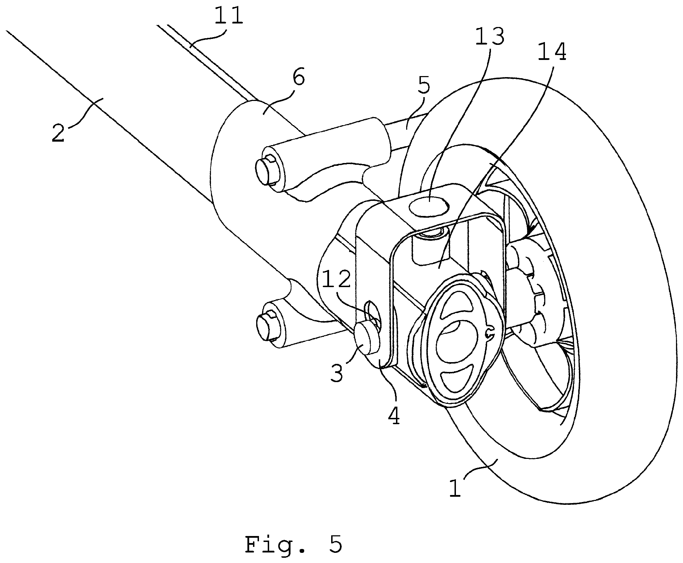

Fig. 5 zeigt eine perspektivische Ansicht der steckbaren Radanordnung ohne Bremsleitung 7 mit gesperrtem Haltebügel **4.** In dieser Ansicht ist ein Halteelement 13 zu sehen, das den Haltebügel 4 über die Haltemanschette 14 mit dem Profilrohr 2 verbindet. Das gezeigte Halteelement 13 ist als eine Schraube ausgebildet, die durch ein Loch in dem Haltebügel 4 geführt und in eine entsprechende zylindrische Aufnahme an der Haltemanschette 14 eingeschraubt ist. Vorteilhaft ist zwischen Haltemanschette 14 bzw. zylindrischer Aufnahme und Haltebügel 4 zusätzlich ein Federelement in Form einer Spiralfeder angeordnet.

In einer alternativen Ausführungsform ist das Halteelement 13 als Teleskopführung ausgebildet und lässt sich stauchen und/oder auseinanderziehen. Vorteilhaft ist zusätzlich bei der Teleskopführung ein Federelement vorgesehen, was eine rücktreibende Kraft auf den Haltebügel 4 bewirkt. Das Federelement kann hierbei innerhalb oder außerhalb der Teleskopführung angeordnet sein. Hierbei ist es denkbar, dass das Federelement als eine Druckfeder in Form einer Spiralfeder ausgebildet ist.

Das Halteelement 13 kann weiterhin Teil der Haltemanschette 14 sein, die auf das äußere Ende des Profilrohrs 2 aufgeschoben werden kann, womit das Halteelement 13 gemeinsam mit dem Haltebügel 4 einfach und kostengünstig an dem Profilrohr 2 anbringbar ist. Haltebügel 4 und Halteelement 13 können gemeinsam mit der Haltemanschette 14 als gemeinsame, montierbare Komponente ausgeführt sein.

Ein solches Halteelement 13, so wie es in Fig. 5 gezeigt ist, ist auch für die Ausführungsformen der Radanordnung aus Fig. 1 bis Fig. 4 vorgesehen, wird dort jedoch von dem Haltebügel 4 verdeckt.

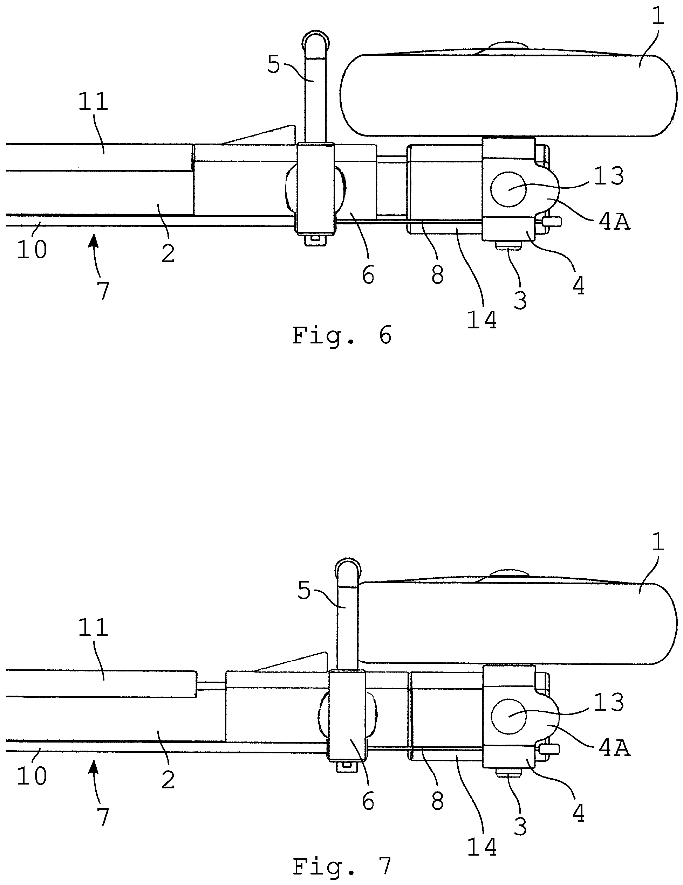

Fig. 6 zeigt eine Draufsicht der Radanordnung mit ungebremstem, außenliegendem Rad 1 und Fig. 7 zeigt eine Draufsicht der Radanordnung mit gebremstem, außenliegendem Rad 1. Im Vergleich von Fig. 6 und Fig. 7 ist die Bremshülse 6 mit der Bremsbacke 5 entlang der Längserstreckung des Profilrohrs 2 in Richtung Rad 1 verschoben, wobei die Bremsbacke 5 auf das Rad 1 aufdrückt und so eine Bremskraft bewirkt.

Die Bewegung der Bremshülse 6 mitsamt der Bremsbacke 5 wird durch Kraftübertragung mittels der Bremsleitung 7 bewirkt. Hierbei wird das bereits bekannte Prinzip eines Bowdenzuges angewandt. In einer vorteilhaften Ausführungsform ist weiterhin ein Federelement vorgesehen, welches eine rücktreibende Kraft auf die Bremshülse 6 bewirkt, sodass diese ohne Kraftbeaufschlagung über die Bremsleitung 7 stets vom Rad 1 wegbewegt wird und so das Rad 1 im Normalfall ungebremst ist. Vorteilhaft ist solch ein Federelement als Spiralfeder ausgebildet, durch die die Seele 8 verläuft. Das Federelement ist vorteilhaft zwischen Bremshülse 6 und dem äußeren Ende des Profilrohrs 2 bzw. Haltemanschette 14 angeordnet. Hierbei ist das äußere Ende der Seele 8 von einer Aufnahme an der Haltemanschette 14 aufgenommen und die Haltemanschette 14 ist wiederum am äußeren Ende des Profilrohrs 2 befestigt.

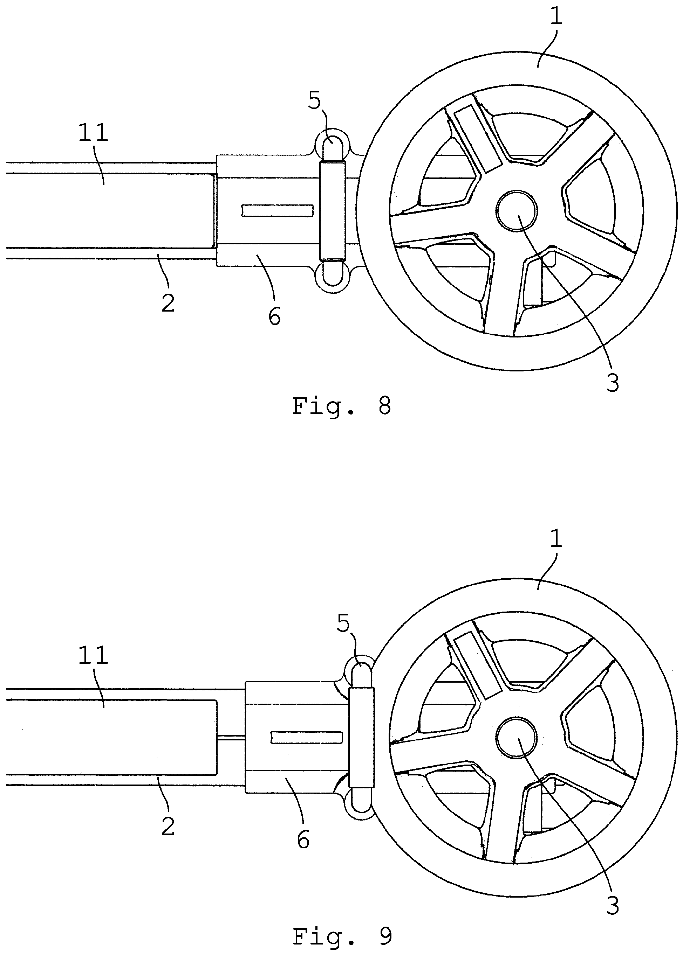

Fig. 8 und Fig. 9 zeigen jeweils eine Seitenansicht der Radanordnung mit ungebremsten bzw. gebremsten, außenliegendem Rad 1, so wie sie bereits in Fig. 6 und Fig. 7 gezeigt ist. Hierbei wird nochmal das Prinzip der Bremswirkung auf das Rad 1 dargestellt. Die Bremsleitung 7, welche eine Bremskraft auf die Bremshülse 6 und Bremsbacke 5 überträgt, ist hierbei nicht zu sehen, da sie von dem Profilrohr 2 verdeckt wird.

Fig. 10 zeigt eine perspektivische Ansicht der steckbaren Radanordnung mit Bremsleitung 7 und mit gesperrtem Haltebügel **4.** Im Unterschied zu Fig. 5 weist die hier gezeigte steckbare Radanordnung an der Bremse zusätzlich ein Federelement 15 in Form einer Spiralfeder auf. Das äußere freie Ende der Seele 8 ist in einer Aufnahme angeordnet, wobei die Aufnahme seitlich an der Haltemanschette 14 angeformt ist. Zwischen dieser Aufnahme an der Haltemanschette 14 und der Hülse 9 ist die Spiralfeder angeordnet, wobei innerhalb der Spiralfeder die Seele 8 verläuft. Die Hülse 9 wiederum ist an der Bremshülse 6 von einer entsprechende Aufnahme aufgenommen, die seitlich an der Bremshülse 6 angeformt ist. Angeformt heißt in diesem Fall, dass Aufnahme und Haltemanschette 14 bzw. Aufnahme und Bremshülse 6 einteilig ausgebildet sind.

Wird nunmehr bei einem Bremsvorgang die Bremshülse 6 durch Kraftübertragung über die Bremsleitung 7 in Richtung Haltemanschette 14 geschoben, so wird das Federelement 15 komprimiert, das infolgedessen eine rücktreibende Federkraft bewirkt. Unterbleibt die Kraftbeaufschlagung über die Bremsleitung 7, so wird die Bremshülse 6 infolge der rücktreibenden Federkraft wieder in ihre ursprüngliche Position zurückverschoben. Die Bremse ist in der ursprünglichen Position in einer ungebremsten Position. Das heißt, die Bremsbacke 5 hat keine Bremswirkung auf das Rad 1 und ist beabstandet vom Rad 1 angeordnet, sodass sich das Rad 1 frei drehen kann.

In der gezeigten Ausführungsform sind seitlich an der Haltemanschette 14 zusätzliche Erhebungen angeordnet, zwischen diesen die Schenkel des U-förmigen Haltebügels 4 aufgenommen sind, wobei der Haltebügel 4 weiterhin verschiebbar ist. Die seitlichen Erhebungen führen hierbei die gleitende Bewegung des Haltebügels 4. Vorteilhaft sind die Erhebungen auf beiden Seiten der Haltemanschette 14 angeordnet, sodass der Haltebügel 4 über seine Schenkel beidseitig geführt ist. Dies erlaubt eine sichere und einfache Bewegung des Haltebügels 4. Durch Druckkraftbeaufschlagung auf die Bedienfläche 4A wird so der Haltebügel 4 durch die Erhebungen stets in Richtung des Profilrohrs 2 bzw. der Haltemanschette 14 sicher und eindeutig geführt. Beim Drücken auf die Bedienfläche 4A wird durch die Erhebungen ein Weggleiten des Haltebügels 4 in eine andere Richtung als die, die für eine bestimmungsgemäße Bedienung vorgesehen ist, wird hierdurch einfach und effektiv verhindert.

Weiterhin sind an den äußeren Enden der Bremsbacke 5, die als U-Profil mit zwei offenen Enden an den Schenkeln ausgebildet ist, Erhebungen ausgebildet. Die Bremsbacke 5 ist verschiebbar von zwei gegenüberliegenden Aufnahmen an der Bremshülse 6 aufgenommen und gehalten, wobei die Erhebungen an den äußeren Enden der Schenkel der Bremsbacke 5 dazu dienen, dass die Bremsbacke 5 nicht aus den Aufnahmen herausgezogen werden kann.

Weiterhin ist zwischen Haltemanschette 14 und Haltebügel 4 ein weiteres Federelement 16 in Form einer Spiralfeder zu sehen, welche um das Halteelement 13 herum angeordnet ist. Das Federelement 16 dient hierbei als Druckfeder. Drückt ein Bediener auf den Haltebügel 4 bzw. auf die Bedienfläche 4A, so wird der Haltebügel 4 entlang der Längserstreckung des Halteelements 13, hier in Form einer Schraube, in Richtung Profilrohr 2 bzw. Haltemanschette 14 bewegt und das Federelement 16 entsprechend zusammengedrückt. Lässt der Bediener anschließend wieder los, so wird der Haltebügel 4 infolge der rücktreibenden Federkraft des Federelements 16 wieder in seine ursprüngliche Ausgangsposition, das heißt die Sperrposition des Haltebügels 4 verbracht.

### Bezugszeichenliste

- 1: Rad
- 2: Profilrohr
- 3: Steckachse
- 4: Haltebügel
- 4A: Bedienfläche
- 5: Bremsbacke
- 6: Bremshülse
- 7: Bremsleitung
- 8: Seele
- 9: Hülse
- 10: Hülle
- 11: Schutzleiste
- 12: Ringnut
- 13: Halteelement
- 14: Haltemanschette
- 15: Federelement
- 16: Federelement

## Patentansprüche

1. Steckbare Radanordnung aufweisend wenigstens ein Profilrohr (2), wenigstens eine Steckachse (3), wenigstens ein Rad (1), welches mit der wenigstens einen Steckachse (3) verbindbar ist, **dadurch gekennzeichnet, dass** die Anordnung wenigstens einen Haltebügel (4) aufweist, mit dem die wenigstens eine Steckachse (3) an dem wenigstens einen Profilrohr (2) von jeder Seite des wenigstens einen Profilrohrs (2) arretierbar ist, wobei der wenigstens eine Haltebügel (4) und das wenigstens eine Profilrohr (2) jeweils wenigstens eine Bohrung aufweisen, durch die die wenigstens eine Steckachse (3) durchsteckbar ist.

2. Steckbare Radanordnung nach Patentanspruch 1, **dadurch gekennzeichnet, dass** die wenigstens eine Steckachse (3) wenigstens eine radial umlaufende Ringnut (12) aufweist.

3. Steckbare Radanordnung nach Patentanspruch 1, **dadurch gekennzeichnet, dass** das wenigstens eine Rad (1) mit der wenigstens einen Steckachse (3) beidseitig in die jeweils wenigstens eine Bohrung des wenigstens einen Haltebügels (4) und der wenigstens einen Profilrohr (2) einsteckbar ist, wodurch das wenigstens eine Rad (1) in eine erste Steckposition und in eine zweite Steckposition verbringbar ist.

4. Steckbare Radanordnung nach Patentanspruch 1, **dadurch gekennzeichnet, dass** der wenigstens eine Haltebügel (4) eine U-Form aufweist und an den Schenkeln der U-Form auf gleicher Höhe jeweils wenigstens eine Bohrung vorgesehen ist, durch die die wenigstens eine Steckachse (3) durchsteckbar ist.

5. Steckbare Radanordnung nach Patentanspruch 4, **dadurch gekennzeichnet, dass** die wenigstens eine Bohrung an dem wenigstens einen Haltebügel (4) als eine Doppelbohrung mit zwei sich überschneidenden Bohrungen mit unterschiedlich großen Durchmessern ist.

6. Steckbare Radanordnung nach Patentansprüchen 2 und 5, **dadurch gekennzeichnet, dass** bei der Doppelbohrung ein erster Durchmesser und ein zweiter Durchmesser vorgesehen ist, wobei der erste Durchmesser dem Außendurchmesser der Steckachse (3) und der zweite Durchmesser dem Außendurchmesser der Ringnut (12) derart entspricht, dass die Durchmesser der Doppelbohrung und die jeweiligen Außendurchmesser der Steckachse (3) und der Ringnut (12) jeweils als Spielpassungen ausgebildet sind.

7. Steckbare Radanordnung nach Patentanspruch 1, **dadurch gekennzeichnet, dass** das wenigstens eine Profilrohr (2) aus einem Strangpressprofil mit ovalem Querschnitt ausgebildet ist.

8. Steckbare Radanordnung nach Patentanspruch 1, **dadurch gekennzeichnet, dass** das wenigstens eine Profilrohr (2) eine seitliche Schutzleiste (11) aufweist.

9. Steckbare Radanordnung nach Patentanspruch 1, **dadurch gekennzeichnet, dass** die Radanordnung eine Bremse für das wenigstens eine Rad (1) aufweist, mit der das wenigstens eine Rad (1) bremsbar ist.

10. Steckbare Radanordnung nach Patentanspruch 9, **dadurch gekennzeichnet, dass** die Bremse wenigstens eine Bremshülse (6) mit daran angeordneter Bremsbacke (5) aufweist, wobei die wenigstens eine Bremshülse (6) verschiebbar an dem wenigstens einen Profilrohr (2) angeordnet ist.

11. Steckbare Radanordnung nach Patentansprüchen 9 und 10, **dadurch gekennzeichnet, dass** die wenigstens eine Bremshülse (6) mittels Zugkraftbeaufschlagung über wenigstens eine Bremsleitung (7) verschiebbar ist, wobei die wenigstens eine Bremsleitung (7) als ein Bowdenzug ausgebildet ist und wenigstens eine Seele (8), eine Hülse (9) sowie eine Hülle (10) umfasst.

12. Rollator mit wenigstens einer steckbaren Radanordnung nach einem der vorangehenden Patentansprüche 1 bis 11, wobei durch die wenigstens eine steckbare Radanordnung eine Spurbreitenveränderung des Rollators bewirkbar ist.

## Claims

1. Plug-in wheel assembly comprising at least one profile tube (2), at least one thru axle (3), at least one wheel (1) which can be connected to the at least one thru axle (3), **characterized in that** the assembly comprises at least one holding bracket (4) with which the at least one thru axle (3) is lockable with respect to the at least one profile tube (2) from each side of the at least one profile tube (2), wherein the at least one holding bracket (4) and the at least one profile tube (2) each comprise at least one bore through which the at least one thru axle (3) is thrustable.

2. Plug-in wheel assembly according to patent claim 1, **characterized in that** the at least one thru axle (3) has at least one radially circumferential ring groove (12).

3. Plug-in wheel assembly according to patent claim 1, **characterized in that** the at least one wheel (1) with the at least one thru axle (3) can be inserted on both sides into the at least one bore of the at least one holding bracket (4) and the at least one profile tube (2), whereby the at least one wheel (1) can be moved into a first plug-in position and into a second plug-in position.

4. Plug-in wheel assembly according to patent claim 1, **characterized in that** the at least one holding bracket (4) has a U-shape and at least one hole is provided at the same height on each of the legs of the U-shape, through which the at least one thru axle (3) is thrustable.

5. Plug-in wheel assembly according to patent claim 4, **characterized in that** the at least one bore on the at least one holding bracket (4) is a double bore with two intersecting bores of different diameters.

6. Plug-in wheel assembly according to patent claims 2 and 5, **characterized in that** the double bore has a first diameter and a second diameter, wherein the first diameter corresponds to the outer diameter of the thru axle (3) and the second diameter corresponds to the outer diameter of the ring groove (12) in such a way that the diameters of the double bore and the respective outer diameters of the thru axle (3) and the ring groove (12) are each designed as clearance fits.

7. Plug-in wheel assembly according to patent claim 1, **characterized in that** the at least one profile tube (2) is formed from an extruded profile with an oval cross-section.

8. Plug-in wheel assembly according to patent claim 1, **characterized in that** the at least one profile tube (2) has a lateral protective strip (11).

9. Plug-in wheel assembly according to patent claim 1, **characterized in that** the wheel assembly has a brake for the at least one wheel (1), with which the at least one wheel (1) is breakable.

10. Plug-in wheel assembly according to patent claim 9, **characterized in that** the brake has at least one brake sleeve (6) with a brake shoe (5) arranged thereon, wherein the at least one brake sleeve (6) is arranged in a displaceable manner on the at least one profile tube (2).

11. Plug-in wheel assembly according to patent claims 9 and 10, **characterized in that** the at least one brake sleeve (6) can be displaced by applying tensile force via at least one brake line (7), wherein the at least one brake line (7) is designed as a Bowden cable and comprises at least one core (8), a sleeve (9), and a sheath (10).

12. Rollator with at least one plug-in wheel assembly according to one of the preceding patent claims 1 to 11, wherein with the at least one plug-in wheel assembly a change of the track width of the rollator is effectible.

## Revendications

1. Agencement de roue enfichable présentant au moins un tube profilé (2), au moins un axe enfichable (3), au moins une roue (1) pouvant être reliée à l'au moins un axe enfichable (3), **caractérisé en ce que** l'agencement présente au moins un étrier de retenue (4), avec lequel l'axe enfichable (3) peut être bloqué sur l'au moins un tube profilé (2) de chaque côté de l'au moins un tube profilé (2), l'au moins un étrier de retenue (4) et l'au moins un tube profilé (2) présentant chacun au moins un alésage à travers lequel l'axe enfichable (3) peut être enfiché.

2. Agencement de roue enfichable selon la revendication 1, **caractérisé en ce que** l'au moins un axe enfichable (3) présente au moins une rainure annulaire (12) s'étendant radialement.

3. Agencement de roue enfichable selon la revendication 1, **caractérisé en ce que** l'au moins une roue (1) avec l'au moins un axe enfichable (3) peut être enfichée des deux côtés dans l'au moins un alésage de l'au moins un étrier de retenue (4) et de l'au moins un tube profilé (2), ce qui permet de placer l'au moins une roue (1) dans une première position d'enfichage et dans une deuxième position d'enfichage.

4. Agencement de roue enfichable selon la revendication 1, **caractérisé en ce que** l'au moins un étrier de retenue (4) présente une forme en U et au moins un alésage est prévu à chaque fois à la même hauteur sur les branches de la forme en U, à travers lequel l'au moins un axe enfichable (3) peut être enfiché.

5. Agencement de roue enfichable selon la revendication 4, **caractérisé en ce que** l'au moins un alésage sur l'au moins un étrier de retenue (4) est réalisé sous la forme d'un alésage double avec deux alésages se croisant avec des diamètres différents.

6. Agencement de roue enfichable selon les revendications 2 et 5, **caractérisé en ce qu'**un premier diamètre et un deuxième diamètre sont prévus dans le cas du double alésage, le premier diamètre correspondant au diamètre extérieur de l'axe enfichable (3) et le deuxième diamètre correspondant au diamètre extérieur de la rainure annulaire (12) de telle sorte que les diamètres du double alésage et les diamètres extérieurs respectifs de l'axe enfichable (3) et de la rainure annulaire (12) sont formés chacun sous forme d'ajustements avec jeu.

7. Agencement de roue enfichable selon la revendication 1, **caractérisé en ce que** l'au moins un tube profilé (2) est formé d'un profilé extrudé de section ovale.

8. Agencement de roue enfichable selon la revendication 1, **caractérisé en ce que** l'au moins un tube profilé (2) présente une baguette de protection latérale (11).

9. Agencement de roue enfichable selon la revendication 1, **caractérisé en ce que** l'agencement de roue présente un frein pour l'au moins une roue (1), au moyen duquel l'au moins une roue (1) peut être freinée.

10. Agencement de roue enfichable selon la revendication 9, **caractérisé en ce que** le frein présente au moins une douille de frein (6) sur laquelle est disposée une mâchoire de frein (5), l'au moins une douille de frein (6) étant disposée de manière à pouvoir coulisser sur l'au moins un tube profilé (2).

11. Agencement de roue enfichable selon les revendications 9 et 10, **caractérisé en ce que** l'au moins une douille de frein (6) peut être déplacée au moyen d'une force de traction appliquée via au moins une conduite de frein (7), l'au moins une conduite de frein (7) étant conçue comme un câble Bowden et comprenant au moins une âme (8), une douille (9) et une gaine (10).

12. Déambulateur à roulettes avec au moins un agencement de roue enfichable selon l'une quelconque des revendications 1 à 11 précédentes, **caractérisé en ce qu'**une variation de largeur de voie du déambulateur à roulettes peut être provoquée par l'au moins un agencement de roue enfichable.
